Europäisches Patentamt

European Patent Office

Office européen des brevets

(19)

(11) Numéro de publication : **0 341 136 B1**

(12) **FASCICULE DE BREVET EUROPEEN**

(45) Date de publication du fascicule du brevet :
03.06.92 Bulletin 92/23

(51) Int. Cl.⁵ : **B60R 13/06**

(21) Numéro de dépôt : **89401200.4**

(22) Date de dépôt : **27.04.89**

(54) **Coulisse d'étanchéité,notamment pour glace mobile de véhicule automobile.**

(30) Priorité : **06.05.88 FR 8806172**

(43) Date de publication de la demande :
**08.11.89 Bulletin 89/45**

(45) Mention de la délivrance du brevet :
**03.06.92 Bulletin 92/23**

(84) Etats contractants désignés :
**BE DE ES GB IT LU NL SE**

(56) Documents cités :
**DE-A- 3 103 535**
**GB-A- 2 066 881**

(73) Titulaire : **HUTCHINSON**
**2 rue Balzac**
**F-75008 Paris (FR)**

(72) Inventeur : **Guillon, Henri**
**66, Avennue de Paris**
**F-78740 Vaux-Sur-Seine (FR)**

(74) Mandataire : **Orès, Bernard et al**
**Cabinet ORES 6, Avenue de Messine**
**F-75008 Paris (FR)**

**Description**

La présente invention est relative à un dispositif d'étanchéité et de guidage pour des surfaces qui peuvent être animées d'un mouvement de translation telles que, notamment, des vitres ou glaces d'automobiles ou des surfaces métalliques et analogues.

De tels dispositifs connus dans l'industrie automobile sous le nom de "coulisses", sont généralement réalisés en un matériau élastomère, comme du caoutchouc ou une matière plastique et sont destinés non seulement à remplir une fonction de guidage, mais également à assurer l'étanchéité des surfaces mobiles vis-à-vis du bruit et à empêcher l'introduction de toute lame, crochet, fil métallique ou autre moyen d'effraction si ténu soit-il.

Un grand nombre de coulisses de guidage pour vitres d'automobiles a été proposé conformément à l'art antérieur pour résoudre le double problème posé par la nécessité d'assurer l'étanchéité précitée de la surface mobile à sa jonction avec le cadre fixe dans lequel elle est montée, sans cependant gêner le coulissement de la surface mobile pendant son mouvement par rapport au châssis fixe.

Les solutions proposées à ces deux problèmes ont abouti à la mise sur le marché de joints d'étanchéité comprenant une lèvre d'étanchéité prévue à l'extérieur d'un corps tubulaire, comme dans DE-A1-3 103 535 ou à des dispositifs à deux lèvres d'étanchéité portées par un profilé sensiblement en forme de U, les deux lèvres s'appliquant contre les faces respectives de la vitre et étant revêtues sur la partie de leur surface en contact avec la vitre d'un revêtement facilitant le glissement de celle-ci, voir par exemple FR-A-2 307 450 ou GB-A-2 066 881 qui prévoit que les lèvres d'étanchéité soient ménagées en tant qu'appendices en saillie sur un corps de joint tubulaire dont la déformation est, de ce fait, limitée ce qui ne permet ni une application surfacique satisfaisante des lèvres sur la vitre, ni une pénétration importante de celle-ci dans le joint d'étanchéité.

L'invention a précisément pour objet une coulisse assurant une excellente étanchéité, mais ne présentant cependant pas les inconvénients des dispositifs connus.

Une coulisse d'étanchéité suivant l'invention, notamment pour vitre ou glace mobile de véhicule automobile, comportant un talon ou corps de montage sur l'encadrement de la baie que ladite vitre ou glace est destinée à fermer et deux lèvres d'étanchéité garnies d'un moyen facilitant le glissement et raccordées audit corps ou talon, d'une part et reliées l'une à l'autre par une partie déformable élastiquement sous l'effet d'une pression, d'autre part, la déformation de cette partie provoquant le rapprochement desdites lèvres dont l'écartement dans la zone opératoire et à l'état de repos de la coulisse est supérieur à l'épaisseur de la vitre (coulisse connue de GB-A-2 066 881), est caractérisée en ce que ladite partie qui est pour sa plus grande partie à l'intérieur du corps ou talon a la forme d'un V dont les branches sont attachées aux extrémités des lèvres distantes dudit corps, la profondeur du V étant telle que, dans la condition de fermeture, l'appui de la vitre sur les branches du V et éventuellement sur son fond amène lesdites lèvres en contact surfacique avec la vitre.

Pour faciliter leur déformation les lèvres comportent avantageusement des échancrures ménagées à leurs extrémités opposées à celles d'attache aux branches de la partie en V, c'est-à-dire sensiblement au niveau de leur raccordement au corps ou talon de montage.

Suivant un mode de réalisation de l'invention, et pour une coulisse destinée à être montée sur un châssis comportant au moins un profil d'accrochage recourbé, ledit corps ou talon comporte une patte souple, profilée de manière à épouser le profil d'accrochage et à laquelle est raccordée l'une des lèvres de la coulisse.

Dans une première forme de réalisation, l'ensemble de la coulisse est réalisé dans un seul et même matériau.

Suivant une variante de mise en oeuvre de l'invention, les lèvres sont constituées en un matériau de dureté inférieure à celle du corps ou talon de montage et éventuellement égale à celle de ladite partie recourbée dudit corps et/ou à celle de saillies ou nervures d'accrochage de celui-ci sur le châssis de la vitre ou glace mobile.

Le moyen facilitant le glissement dont sont pourvues les parties de la coulisse venant en contact avec la vitre peut être, comme connu, sous forme d'un flocage de poils, mais il est aussi possible d'appliquer des revêtements de matière plastique à faible coefficient de frottement, comme par exemple une polyoléfine ou du polytétrafluoroéthylène.

Suivant un mode de réalisation préféré de l'invention, ce revêtement favorisant le glissement est coextrudé avec le ou les matériaux, de préférence un ou des élastomère(s) ou plastomère(s), constituant les différentes parties de la coulisse sur lesquelles il est placé.

En variante, le revêtement favorisant le glissement est disposé sur l'élastomère ou le plastomère par trempage ou pulvérisation.

Selon une autre variante, un "agent glissant" est incorporé dans la masse d'élastomère ou de plastomère et il forme le revêtement favorisant le glissement par migration à la surface dudit élastomère ou plastomère.

L'invention sera mieux comprise et d'autres caractéristiques apparaîtront à la lecture de la description qui suit, faite en référence au dessin annexé dans lequel :

– la figure 1 est une vue partielle d'une automobile, montrant un exemple d'application de l'invention ;

– la figure 2 montre, en coupe transversale, une coulisse suivant l'invention, montée sur l'encadrement de la baie d'une porte d'automobile ; et

– les figures 3 et 4 sont des vues en coupe transversale, à plus grande échelle, d'une partie d'une coulisse suivant l'invention, respectivement en position de repos et en condition opératoire de fermeture de la baie.

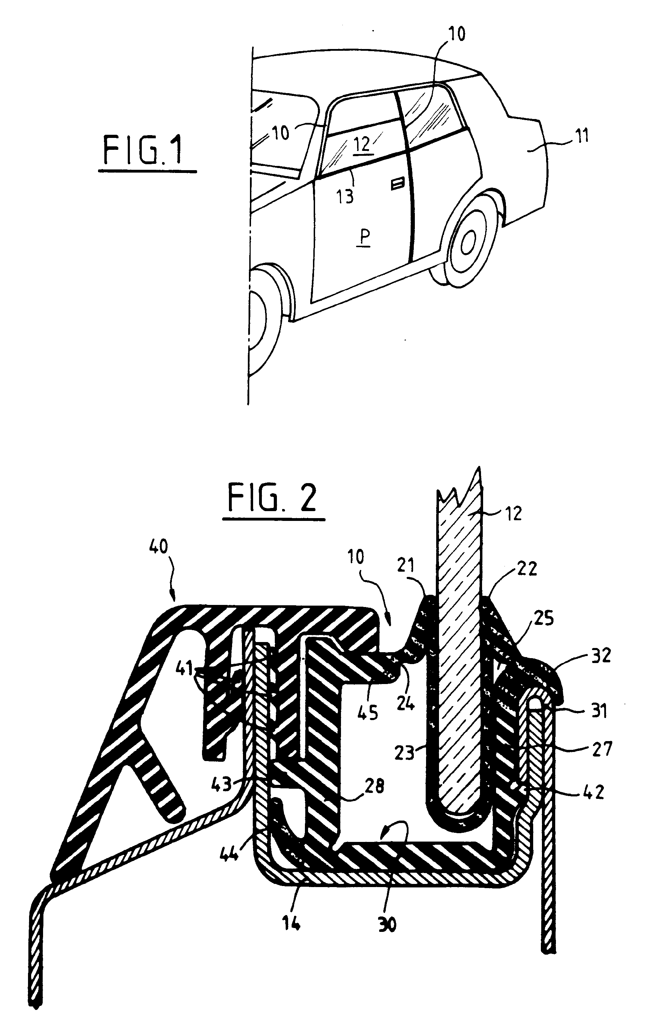

L'invention est explicitée, dans ce qui suit, en référence à une glace mobile d'automobile, cette indication n'ayant, bien entendu, aucun caractère limitatif. L'automobile 11, montrée partiellement sur la figure 1, est munie d'une glace ou vitre 12 représentée en position semi-baissée. L'étanchéité de la baie que peut fermer cette vitre à la pluie, au sable, à la poussière et plus généralement vis-à-vis de l'introduction de tout élément ou particule solide, liquide ou gazeuse ainsi qu'aux ondes sonores est assurée en partie basse par au moins un lécheur 13, tandis que l'étanchéité supérieure et latérale de la vitre est assurée simultanément à son guidage par des coulisses telles que 10, fixées dans un cadre ou châssis 14, généralement métallique, le plus souvent à base de profilés en U fixés à la portière P.

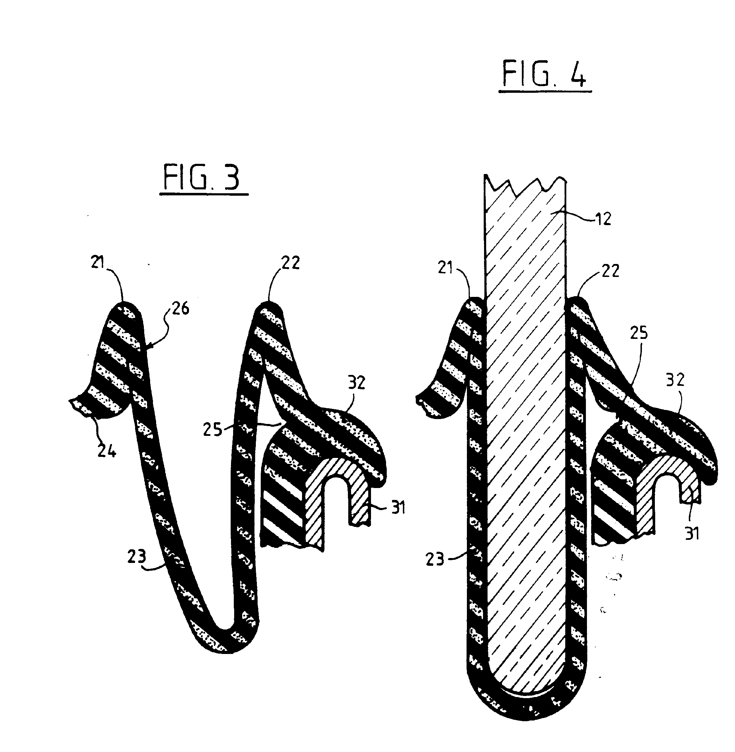

Comme bien montré sur la figure 2, -où la coulisse 10 est représentée en condition opératoire, c'est-à-dire assurant l'étanchéité de la vitre 12-, la coulisse comprend deux lèvres d'étanchéité 21, 22, reliées l'une à l'autre par une partie élastiquement déformable 23, indépendante du corps 30 de fixation de la coulisse sur le châssis 14 et qui, au repos, c'est-à-dire lorsque la vitre est baissée, a sensiblement la forme générale d'un V, figure 3, tandis que cette même partie a la forme d'un U à branches sensiblement parallèles en condition opératoire, comme visible sur la figure 4. Les lèvres 21 et 22, réalisées en un matériau élastique, notamment un élastomère ou un plastomère comme du caoutchouc ou du PVC, sont ainsi raccordées à leurs extrémités distales à la partie 23 et, à leurs autres extrémités au corps ou talon 30 de fixation de la coulisse sur la châssis 14 de la carrosserie. Dans l'exemple de réalisation décrit et illustré le châssis de la carrosserie comporte un profil d'accrochage 31, recourbé et le corps 30 en U comporte à l'extrémité d'une première de ses branches 27 une patte profilée, 32, dont la courbure épouse la courbe du profil 31. La patte 32 est de préférence constituée en un matériau plus souple que celui du reste du corps, qui lui est en un matériau élastomère ou plastomère relativement dur, comme montré sur le dessin par les parties simplement hachurées ou hachurées et pointillées.

Comme illustré, la patte d'accrochage prolonge avantageusement la lèvre 22, cette dernière, la lèvre 21, et le raccord 23 étant réalisés en le même matériau relativement souple.

Le blocage de la coulisse 10 dans le cadre ou châssis 14 est assuré par butée d'une nervure 42 de la branche 27 contre l'extrémité interne du profil 31 et par le frottement d'une protubérance 44 attachée à la lèvre 28 contre le cadre 14, la protubérance 44 étant avantageusement réalisée sous forme d'un doigt relativement souple. Au blocage de la coulisse contribue un profilé 40, accroché sur le châssis 14 par des griffes 41 et prenant appui sur des retours 43 et 45 de la seconde branche 28 du corps ou talon 30.

Des échancrures 24, 25, ménagées au raccordement des lèvres 21 et 22 et du corps 30, sur les faces des lèvres qui font face au corps, favorisent le rapprochement des lèvres sous l'effet de la pression de la vitre 12, de sorte que, en condition opératoire, les lèvres sont en contact surfacique important avec la vitre, d'une part, et ladite vitre est logée sur une relativement grande hauteur à l'intérieur du joint, d'autre part.

Les lèvres d'étanchéité, ainsi que diverses parties des flancs et du fond sur lesquelles la vitre 12 est susceptible de venir glisser sont revêtues d'un matériau améliorant le glissement de celle-ci, montré en 26 et en noir sur les figures, par exemple une polyoléfine ou du polytétrafluoroéthylène, tandis que le ou les matériau(x) moins dur(s) constitutif(s) des lèvres (représenté en hachûres et points) pour le(s) distinguer du matériau constitutif du reste de la coulisse, de préférence mais non exclusivement plus dur, est (sont) avantageusement choisi(s) comme ce dernier parmi des élastomères ou des plastomères.

La coulisse est avantageusement réalisée par coextrusion des divers matériaux la constituant.

Le revêtement favorisant le glissement est disposé sur l'élastomère ou le plastomère par trempage ou pulvérisation.

Selon une autre variante, un "agent glissant" est incorporé dans la masse d'élastomère ou de plastomère et il forme le revêtement favorisant le glissement par migration à la surface dudit élastomère ou plastomère.

L'invention n'est évidemment pas limitée aux modes de réalisation décrits et/ou représentés, ni à son application à des coulisses de vitres d'automobiles mais s'applique généralement à toute coulisse de surface mobile. Les divers matériaux peuvent être choisis dans de très larges gammes ; leur choix sera fait notamment en fonction des conditions d'utilisation, les matériaux de glissement des deux lèvres pouvant être différents si les deux faces de la surface en mouvement sont de nature différente, par exemple si les deux faces de la vitre ont été traitées différemment.

## Revendications

1. Coulisse d'étanchéité, notamment pour glace ou vitre mobile de véhicule automobile, comportant un talon ou corps de montage sur l'encadrement de la baie que ladite vitre ou glace est destinée à fermer et deux lèvres d'étanchéité (21, 22) garnies d'un moyen (26) facilitant le glissement et raccordées audit corps ou talon, d'une part, et reliées l'une à l'autre par une partie (23) déformable élastiquement sous l'effet d'une pression, d'autre part, la déformation de cette partie (23) provoquant le rapprochement desdites lèvres (21, 22) dont l'écartement dans la zone opératoire et à l'état de repos de la coulisse est supérieur à l'épaisseur de la vitre, caractérisée en ce que ladite partie (23) qui est pour sa plus grande partie à l'intérieur du corps ou talon (30) a la forme d'un V dont les branches sont attachées aux extrémités des lèvres (21, 22) distantes dudit corps (30), la profondeur du V étant telle que, dans la condition de fermeture, l'appui de la vitre (12) sur les branches du V et éventuellement sur son fond amène les lèvres (21, 22) en contact surfacique avec la vitre (12).

2. Coulisse selon la revendication 1, caractérisée en ce que les lèvres (21, 22) présentent des échancrures (24, 25) ménagées à leurs extrémités opposées à celles d'attache aux branches de la partie en V (23), c'est-à-dire sensiblement à leur raccordement au talon ou corps (30) pour favoriser le rapprochement des lèvres en position d'étanchéité.

3. Coulisse selon la revendication 1 ou 2, destinée à être montée sur un châssis comportant au moins un profil d'accrochage recourbé (31), caractérisée en ce que le corps (30) comporte une patte (32) profilée en correspondance du profil d'accrochage et à laquelle est raccordée l'une des lèvres (22) de la coulisse.

4. Coulisse suivant la revendication 1, caractérisée en ce que le moyen (26) favorisant le glissement est réalisé par coextrusion de polyoléfine ou de polytétrafluoroéthylène avec le ou les matériau(x), de préférence un ou des élastomère(s) ou plastomère(s) constituant les différentes parties de la coulisse sur lesquelles il est placé.

5. Coulisse selon la revendication 4, caractérisée en ce que le revêtement favorisant le glissement (26) est réalisé par trempage ou pulvérisation.

6. Coulisse selon la revendication 4, caractérisée en ce que le revêtement favorisant le glissement (26) est réalisé par migration en surface d'un agent glissant incorporé dans la masse d'élastomère ou de plastomère.

**Patentansprüche**

1. Dichtungsgleitführung, insbesondere für eine bewegliche Kraftfahrzeugscheibe oder -verglasung, mit einem Ansatz oder Körper für die Montage auf der Umrahmung der Öffnung, die die genannte Scheibe oder Verglasung bestimmungsgemäß verschließen soll, und mit zwei Dichtlippen (21, 22), die mit Mitteln (26) versehen sind, welche die Gleitbewegung erleichtern und mit dem genannten Körper oder Ansatz einerseits verbunden sind und andererseits miteinander durch einen Abschnitt (23) verbunden sind, der elastisch unter der Wirkung eines Andrucks verformbar ist, wobei die Verformung dieses Teils (23) die Annäherung der genannten Lippen (21, 22) hervorruft, deren Abstand in der Betriebszone und im Ruhezustand der Gleitführung größer ist als die Dicke der Verglasung, dadurch **gekennzeichnet**, daß der genannte Teil (23), der sich mit seinem größeren Abschnitt im Inneren des Körpers oder Ansatzes (30) befindet, die Form eines V hat, dessen Arme an den Enden der Lippen (21, 22) angebracht sind, die einen Abstand zum genannten Körper (30) aufweisen, wobei die Tiefe des V so ist, daß im Schließzustand die Auflage der Glasscheibe (12) auf den Armen des V und möglicherweise auch auf dessen Boden die Lippen (21, 22) in Oberflächenberührung mit der Glasscheibe (12) mitnimmt.

2. Gleitführung nach Anspruch 1, dadurch **gekennzeichnet,** daß die Lippen (21, 22) bogenförmige Aussparungen (24, 25) aufweisen, die in ihre Enden eingebracht sind, die denen zur Anbringung an den Armen des V-förmigen Teils (23) entgegengesetzt sind, d.h. im wesentlichen an ihrer Verbindung mit dem Ansatz oder Körper (30), um die Annäherung der Lippen in der Dichtungsposition zu begünstigen.

3. Gleitführung nach Anspruch 1 oder 2, bestimmt zur Anbringung an einem Fahrgestell, das mindestens ein gekrümmtes Aufhängeprofil (31) aufweist, dadurch **gekennzeichnet**, daß der Körper (30) eine Klaue (32) aufweist, die in Übereinstimmung mit dem Aufhängeprofil profiliert ist und mit der eine der Lippen (22) der Gleitführung verbunden ist.

4. Gleitführung nach Anspruch 1, dadurch **gekennzeichnet**, daß die Mittel (26), die die Gleitbewegung begünstigen, durch Koextrusion eines Polyolefins oder eines Polytetrafluorethylens zusammen mit dem oder den Material(ien), bevorzugt einem Elastomer oder Elastomeren oder plastomer(en), ausgeführt ist, die die unterschiedlichen Abschnitte der Gleitführung bilden, auf die es aufgesetzt ist.

5. Gleitführung nach Anspruch 4, dadurch **gekennzeichnet**, daß die Verkleidung (26), die die Gleitbewegung begünstigt, als eine Tauchbeschichtung oder Aufstäubung ausgeführt ist.

6. Gleitführung nach Anspruch 4, dadurch **gekennzeichnet**, daß die Verkleidung (26), die die Gleitbewegung begünstigt, durch Wanderung eines Gleitmittels an die Oberfläche bewirkt wird, das in der Elastomer- oder Plastomermasse enthalten ist.

**Claims**

1. Sealing slide, particularly for the movable pane or window of a motor vehicle, comprising a heel or body for fitting on the frame of the bay which said window or pane is intended to close and two sealing lips (21, 22) lined with a means (26) facilitating the sliding and connected to the said body or heel, and joined together by a portion (23) which is resiliently deformable under the effect of a pressure, the deformation of said portion (23) causing the bringing together of said lips (21, 22) of which the distance separating them in the operating zone and in the rest state of the slide is greater than the thickness of the window, characterized in that the said portion (23) most of which is housed inside the body or heel (30) has the shape of a V whose legs are attached to the ends of the lips (21, 22) distant from said body (30), the depth of the V being such that, in the closed condition, the window (12) bears sufficiently deeply on the legs of the V and possibly on the bottom thereof, to bring the lips (21, 22) together in surface contact with the window (12).

2. Slide as claimed in Claim 1, characterized in that the lips (21, 22) have indentations (24, 25) formed at their ends opposite those attached to the legs of the V-shaped portion (23), i.e. approximately at the connection thereof to the heel or body (30) so as to promote the drawing together of the lips into the sealing position.

3. Slide as claimed in Claim 1 or 2, intended to be mounted on a frame comprising at least one curved engagement profile (31), characterized in that the body (30) comprises a lug (32) profiled to correspond with the engagement profile and to which it is connected by one of the lips (22) of the slide.

4. Slide as claimed in Claim 1, characterized in that the means (26) promoting the sliding is formed by co-extrusion of polyolefin or polytetrafluoroethylene with the material(s), preferably one or more elastomers or plastomers forming the different portions of the slide on which it is placed.

5. Slide as claimed in Claim 4, characterized in that the coating promoting the sliding (26) is made by dipping or spraying.

6. Slide as claimed in Claim 4, characterized in that the coating promoting the sliding (26) is formed by the surface migration of a sliding agent incorporated in the elastomer or plastomer mass.

FIG.1

FIG. 2

FIG. 4

FIG. 3